Europäisches Patentamt

European Patent Office

Office européen des brevets

(11) Publication number: **0 106 707**
**A1**

(12) **EUROPEAN PATENT APPLICATION**

(21) Application number: 83306383.7

(22) Date of filing: 20.10.83

(51) Int. Cl.³: **C 09 D 5/00**
**C 09 D 7/12**

(30) Priority: 20.10.82 ZA 827669

(43) Date of publication of application:
25.04.84 Bulletin 84/17

(84) Designated Contracting States:
BE CH DE FR GB IT LI NL

(71) Applicant: DE BEERS INDUSTRIAL DIAMOND DIVISION (PROPRIETARY) LIMITED
8th Floor 45 Main Street
Johannesburg Transvaal(ZA)

(72) Inventor: Davies, Aulette
45, Arend Avenue Randpark Ext. 5
Johannesburg Transvaal(ZA)

(74) Representative: Ellis-Jones, Patrick George Armine et al,
J.A. KEMP & CO. 14 South Square Gray's Inn
London WC1R 5EU(GB)

(54) Coating composition.

(57) A coating composition which is a paint, varnish, lacquer or like product which has uniformly dispersed therein a mass of abrasive particles such as diamond, cubic boron nitride and boron carbide. The composition is preferably liquid under ambient conditions and contains a thixotropic agent such as colloidal silica. The coating composition may be applied to surfaces such as metal, plaster, wood, stone, paper, leather, a refractory material, plastic, cloth, natural and synthetic rubber and provides that surface with a coating film which adheres strongly to the surface and is abrasion resistant.

EP 0 106 707 A1

- 2 -

## BACKGROUND OF THE INVENTION

This invention relates to coating compositions.

Our co-pending patent application No. 82301927.8 describes and claims a coating composition for applying to human nails including a liquid base adapted to be applied to a nail to provide a coating thereon and having suspended therein fine abrasive particles, the liquid base being a Bingham plastic having a yield stress of not less than 0,2 Pa.  Examples of suitable abrasives are diamond, cubic boron nitride, alumina, glass beads and mixtures thereof.  The coating composition produces a particularly wear-resistant coating on a nail to which it is applied.

Coating compositions for coating other surfaces may take the form of paints, varnishes, lacquers and like products.  These compositions may be applied to a variety of surfaces such as metal, plaster, wood, stone, paper, leather, refractory materials, plastic, cloth, natural and synthetic rubber.

Paints may be defined as uniformly dispersed mixtures having a viscosity ranging from a thin liquid to a semisolid paste and comprising a drying oil, synthetic or natural resin or other film-forming component, a solvent or thinner and a suitable colouring agent. The film-forming component and solvent or thinner are usually collectively referred to as the vehicle. Paints which are thinned with water are called water-thinned paints, e.g. acrylic PVA paints. Paints which are thinned with organic solvents are called solvent-thinned paints, e.g. enamel paints. The colouring agent is usually an organic or inorganic pigment.

Paints are produced in a variety of different forms for different applications. There are oil-based paints which are frequently used for coating outside surfaces, walls, floors and metal surfaces; latex paints which include wall paints, masonary paints and outside paints; fire-retardant paints for protecting buildings against fire damage; heat-resisting paints for use in covering warm and hot surfaces; cement water paints which are used to colour sidewalks, cement blocks, basement floors and cement porches; metallic paints which are used on storage tanks, bridges and like structures; wood and plaster primers which are used as undercoats for plaster and wood walls; and enamels which are used to cover the inside and outside surfaces of houses and other buildings.

Varnishes are similar to paints, except that they do not contain a colourant. Varnishes will generally comprise a vegetable oil, e.g. linseed or tung, and solvent or a synthetic or natural resin and solvent. Lacquers are varnishes containing fast-evaporating solvents which solidify by evaporation of the solvents.

For such coating compositions to be effective they must be able to provide a tough and uniform film covering the surface to which they are applied and adhere to that surface.

SUMMARY OF THE INVENTION

According to the present invention, there is provided a method of producing an abrasion-resistant and strongly adherent coating film to a surface, other than a human nail, comprises applying a spreadable coating composition to that surface and allowing the coating composition to form the coating film, the coating composition comprising a paint, varnish, lacquer or like product incorporating a mass of abrasive particles having a hardness greater than 12 on the Modified Mohs Hardness Scale, especially 13 to 15

Further according to the invention there is provided a spreadable coating composition for use in the above described method and comprising a paint, varnish, lacquer or like product incorporating a mass of abrasive particles having a hardness greater than 12 on the Modified Mohs Hardness Scale.

DESCRIPTION OF PREFERRED EMBODIMENTS

The coating compositions are spreadable in the sense that when applied to a surface they will spread over that surface and cover it. The coating film which is produced is abrasion resistant and adheres strongly to that surface. Typical surfaces to which the coating compositions will be applied are identified above and include metal, plaster, wood, stone, paper, leather, refractory materials, plastic cloth, natural and synthetic rubber. The spreadable coating composition may be applied to the surface by methods known in the art such as brushing, rolling or spraying.

The abrasive particles will generally be suspended in the coating composition which is preferably liquid under ambient conditions. Liquid coating compositions may include a thixotropic agent to improve the suspension of the particles in the composition. A particularly suitable thixotropic agent is colloidal silica such as that sold under the trade marks Aerosil and Siloid. It has surprisingly been found that coating compositions containing the abrasive particles and colloidal silica as a thixotropic agent produce coating films which adhere particularly strongly to surfaces to which they are applied.

When the coating composition is a paint it may be any paint known in the art, particularly an acrylic PVA paint or an enamel paint.

Examples of suitable abrasives having the required hardness are diamond, cubic boron nitride and boron carbide.

The abrasive particles will generally have a particle size of less than 50 microns, preferably less than 20 microns.

The content of abrasive particles in the coating composition will vary according to the coating composition and the application to which it is to be put. Generally, the content will not exceed 2,5 grams (12 to 13 carats) per 100 ml of the composition.

The spreadable coating compositions of the invention, save for the incorporation of the abrasive particles and optionally the thixotropic agent, may be any known in the art. The compositions may be made by simply adding the abrasive particles and optionally the thixotropic agent to a prior art coating composition. The composition, once these additions have been made, may be agitated to ensure that the abrasive particles are uniformly dispersed in the composition. It is desirable to agitate the composition, for example by stirring, just prior to applying it to a surface to ensure that the abrasive particles are uniformly dispersed in the composition.

A series of adhesion tests were performed on various compositions using the close contact lap joint method. This test is a measure of adhesiveness under shear loading conditions and is a standard technique in paint testing. The test consists of painting or glueing two relatively high modulus materials together by means of the test material and then applying loads in a tensile manner to give rise to shear forces acting on the specimen faces.

For these tests, a variety of compositions of the invention were compared with a control sample. These tests can be divided into two series.

SERIES 1

In this series a commercially available gloss enamel and a commerically available acrylic PVA were used as controls. A first batch of test samples was made up using the liquid base (enamel or PVA) to which was added 4,8 carats of colloidal silica and 2 carats of diamond particles having a particle size range of up to 20 microns in 50 ml. of the liquid base. A second batch of test samples was produced using the liquid base (enamel or PVA) to which was added 2 carats of diamond particles having a particle size range of up to 20 microns in 50 ml. of the liquid base. The result of the adhesive strength test carried out on these samples are set out in Tables 1 and 2 below:

## TABLE 1 - GLOSS ENAMEL

| Material | Adhesive Strength (MPa x $10^{-3}$) | | | Components Added |
|---|---|---|---|---|
| Peg board | 259 | ± | 64 | Silica + Diamond |
| Peg board | 205 | ± | 21 | Diamond |
| Peg board | 136 | ± | 26 | Control |
| Plaster | 861 | ± | 132 | Silica + Diamond |
| Plaster | 474 | ± | 107 | Diamond |
| Plaster | 357 | ± | 25 | Control |

## TABLE 2 - ACRYLIC PVA

| Material | Adhesive Strength (MPa x $10^{-3}$) | | | Components Added |
|---|---|---|---|---|
| Plaster | 730 | ± | 124 | Silica + Diamond |
| Plaster | 793 | ± | 89 | Diamond |
| Plaster | 583 | ± | 117 | Control |

The excellent adhesive strengths of the paints incorporating diamond particles and diamond particles and silica can be seen from these results.

SERIES 2

A second series of adhesive strength tests were conducted using commercially available enamel paint as control. Test samples were made up as follows:

A  The liquid base to which was added -20 microns diamond particles in an amount of 1,4 carats per 15 ml.

B  Liquid base to which was added -20 microns cubic boron nitride in an amount of 1,4 carats per 15 ml.

C  Liquid base to which was added -20 microns boron carbide particles in an amount of 1,4 carats per 15 ml.

D  Liquid base to which was added -20 microns alumina in an amount of 1,4 carats per 15 ml.

The results of the tests are set out in Table 3 below:

TABLE 3 - ENAMELS

| Sample | Adhesive Strength (MPa x $10^{-3}$) | | |
|--------|------|---|-----|
| A | 600 | $\pm$ | 110 |
| B | 500 | $\pm$ | 90 |
| C | 410 | $\pm$ | 60 |
| D | 260 | $\pm$ | 30 |
| Control | 340 | $\pm$ | 20 |

It will be noted from the above that the sample containing particulate alumina had a poorer adhesive strength than the control sample. Alumina has a hardness of 12 on the Modified Mohs Hardness Scale and therefore compositions containing particulate alumina fall outside the scope of the present invention.

CLAIMS

1.
A method of producing an abrasion-resistant and strongly adherent coating film on a substrate other than human nails including the steps of applying a spreadable coating composition to the surface and allowing the composition to form the film, the coating composition comprising a paint, varnish, lacquer or like product having incorporated therein a mass of abrasive particles having a hardness of greater than 12 on the Modified Mohs Hardness Scale.

2.
A method according to claim 1 wherein the surface on which the coating film is produced is metal, wood, plaster, stone, paper, leather, a refractory material, plastic, cloth, natural or synthetic rubber.

3.
A method according to claim 1 or claim 2 wherein the abrasive particles are uniformly dispersed in the composition.

4.
A method according to any one of the preceding claims wherein the composition is a liquid under ambient conditions.

5.

A method according to claim 4 wherein the composition includes a thixotropic agent.

6.
A method according to claim 5 wherein the thixotropic agent is colloidal silica.

7. A method according to any one of the preceding claims wherein the abrasive particles are selected from diamond, cubic boron nitride and boron carbide.

8. A method according to any one of the preceding claims where the particle size of the abrasive particles is less than 50 microns.

9. A method according to any one of claims 1 to 7 wherein the particle size of the abrasive particles is less than 20 microns.

10. A method according to any one of the preceding claims wherein the abrasive particles are present in the composition in an amount not exceeding 2,5 grams per 100 ml of the composition.

11. A method according to any one of the preceding claims wherein the abrasive particles have a hardness of 13 to 15 on the Modified Mohs Hardness Scale.

12. A spreadable coating composition for use in a method according to any one of the preceding claims comprising a paint, varnish, lacquer or like product having incorporated therein a mass of abrasive particles having a hardness of greater than 12 on the Modified Mohs Hardness Scale.

13. A coating composition according to claim 12 wherein the abrasive particles are uniformly dispersed in the composition.

14. A coating composition according to claim 12 or claim 13 which is a liquid under ambient conditions.

15. A coating composition according to claim 14 including a thixotropic agent.

16. A coating composition according to claim 15 wherein the thixotropic agent is colloidal silica

17. A coating composition according to any one claims 12 to 16 wherein the abrasive particles are selected from the group of diamond, cubic boron nitride and boron carbide.

18. A coating composition according to any one of claims 12 to 17 wherein the particle size of the abrasive particles is less than 50 microns.

19. A coating composition according to any one of claims 12 to 17 wherein the particle size of the abrasive particles is less than 20 microns.

20. A coating composition according to any one of claims 12 to 19 wherein the abrasive particles are present in the composition in an amount not exceeding 2,5 grams per 100 ml of the composition.

21. A coating composition according to any one of claims 12 to 20 wherein the abrasive particles have a hardness of 13 to 15 on the Modified Mohs Hardness Scale.

0106707

**European Patent Office**

# EUROPEAN SEARCH REPORT

Application number

EP 83 30 6383

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-2 572 252 (H. de W. ERASMUS) * Claims; column 1, lines 28-51; column 2, lines 22-33 * | 1-4,11 -14,21 | C 09 D 5/00 C 09 D 7/12 |
| X | US-A-3 846 161 (A.M. MARKS) * Claims; column 1, lines 63-66; column 4, lines 38-45; column 12, lines 51-70 * | 1-4,7- 14,17- 21 | |
| X | US-A-4 018 944 (J.R. HALLSTROM et al.) * Claims 1-7; column 3, lines 18-19, 26-39 * | 1-20 | |
| D,P X | EP-A-0 063 467 (DE BEERS) * Whole document * | 12-20 | TECHNICAL FIELDS SEARCHED (Int. Cl. ³) C 09 D 5/00 C 09 D 7/12 |

The present search report has been drawn up for all claims

| Place of search THE HAGUE | Date of completion of the search 16-01-1984 | Examiner DE ROECK R.G. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82